# EUROPEAN PATENT APPLICATION

(11) **EP 4 783 549 A1**
(43) Date of publication of application: **29.07.2026**
(21) Application number: 24880157.3
(22) Date of filing: 17.10.2024
(51) Int. Cl.: H04L 65/80, H04L 65/65, H04L 67/146, H04L 61/2589

(54) **METHOD AND DEVICE FOR RELAY SERVER IN MOBILE COMMUNICATION SYSTEM SUPPORTING MEDIA-AWARE PACKET PROCESSING**

(30) Priority: 20.10.2023 KR 20230141339; 06.11.2023 KR 20230151743
(71) Applicant: Samsung Electronics Co., Ltd., Suwon-si, Gyeonggi-do 16677 (KR)
(72) Inventor: YANG, Hyunkoo, Suwon-si, Gyeonggi-do 16677 (KR)
(74) Representative: HGF
(86) International application number: PCT/KR2024/015822
(87) International publication number: WO 2025/084820

(57) **Abstract**

The present disclosure relates to a 5G or 6G communication system for supporting a higher data transmission rate. An operation method of a user equipment (UE) in a wireless communication system, according to one embodiment of the present disclosure, comprises the operations of: receiving, from a base station, a real-time transport protocol (RTP) packet transmitted from a real-time communication application server (RTC AS); and transmitting, to a real-time communication application function (RTC AF), a message for requesting a dynamic policy which is to be applied to a service data flow associated with the RTP packet. A parameter for quality of service (QoS) configuration may be provided to a core network from the RTC AF on the basis of the message for requesting the dynamic policy.

## Description

### [Technical Field]

The disclosure relates to a wireless communication system and, more particularly, to a method and a device for providing a quality of service management function based on media characteristics in a 5G wireless network.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

With the advance of mobile communication systems as described above, various services can be provided, and accordingly there is a need for ways to effectively provide these services, in particular, ways to efficiently perform real-time media transmission for voice and video calls, etc.

### [Detailed Description of the Invention]

### [Technical Problem]

The disclosure provides a device and a method capable of effectively providing a quality of service management function considering media characteristics in a wireless communication system.

### [Technical Solution]

According to the disclosure, a method for providing a real-time communication service may include: providing, to a PCF, a PDU set-based QoS-related policy request and PDU set marking information for a real-time communication service; generating a media transport session between entities participating in the real-time communication service, based on the QoS-related policy request and the PDU set marking information; and processing real-time communication service data transmitted through the media transport session according to a PDU set-based QoS policy.

According to the disclosure, the PDU set marking information may include configuration information of a relay server.

According to the disclosure, a method for operating a user equipment (UE) in a wireless communication system may include: receiving, from a base station, a real-time transport protocol (RTP) packet transmitted from a real-time communication application server (RTC AS); and transmitting, to a real-time communication application function (RTC AF), a message requesting a dynamic policy to be applied to a service data flow related to the RTP packet. A parameter for configuring a quality of service (QoS) may be provided from the RTC AF to a core network based on the message requesting the dynamic policy.

According to an embodiment, the message requesting the dynamic policy may include at least one of an identifier for the dynamic policy, an associated policy template identifier, an associated provisioning session identifier, service data flow identification information for requesting a QoS dynamic policy, an identifier of an associated media stream, and protocol data unit (PDU) set marking-related information.

According to an embodiment, the PDU set marking-related information may include at least one of service data flow identification information to which the PDU set marking is applied, a global identifier of an RTP extension header for the PDU set marking, a local identifier of the RTP extension header for the PDU set marking, information on whether a traversal using relays around NAT (TURN) server is used, and a packet format transmitted by the TURN server.

According to the disclosure, a user equipment (UE) in a wireless communication system includes: a transceiver; and a controller. The controller may receive, from a base station, a real-time transport protocol (RTP) packet transmitted from a real-time communication application server (RTC AS). The controller may transmit, to a real-time communication application function (RTC AF), a message requesting a dynamic policy to be applied to a service data flow related to the RTP packet. A parameter for configuring a quality of service (QoS) may be provided from the RTC AF to a core network based on the message requesting the dynamic policy.

### [Advantageous Effects]

A device and a method according to the disclosure may effectively provide a quality of service management function considering media characteristics in a mobile communication system.

Advantageous effects obtainable from the disclosure may not be limited to the above-mentioned effects, and other effects which are not mentioned herein may be clearly understood from the following description by those skilled in the art to which the disclosure pertains.

### [Brief Description of Drawings]

FIG. 1 is a conceptual diagram illustrating a 5G system structure for a real-time communication service in a wireless communication system according to the disclosure.
FIG. 2 is a conceptual diagram illustrating a packetization process of a video data unit in a wireless communication system according to the disclosure.
FIG. 3 is a conceptual diagram illustrating an example of a packet header in a wireless communication system according to the disclosure.
FIG. 4 illustrates an example of an RTP extension header according to an embodiment of the disclosure.
FIG. 5 is a conceptual diagram illustrating an example of a relay server operation in a wireless communication system according to the disclosure.
FIG. 6 is a flowchart illustrating an example of an application data relay procedure using a Send/Data indication in a communication system according to an embodiment of the disclosure.
FIG. 7 is a conceptual diagram illustrating a structure of a STUN message including a Data indication in a communication system according to an embodiment of the disclosure.
FIG. 8 is a flowchart illustrating an example of an application data relay procedure using a channel message in a communication system according to an embodiment of the disclosure.
FIG. 9 is a conceptual diagram illustrating 5G system configuration information and user data flow for a real-time communication service in a wireless communication system according to the disclosure.
FIG. 10 is a conceptual diagram illustrating an example of packet formats received by a UPF in a communication system according to an embodiment of the disclosure.
FIG. 11 is a conceptual diagram illustrating an example of a PDU set marking information signaling path in a wireless communication system according to an embodiment of the disclosure.
FIG. 12 illustrates an example of a TURN configuration information signaling path in a communication system according to an embodiment of the disclosure.
FIG. 13 illustrates a structure of a UE according to an embodiment of the disclosure.
FIG. 14 illustrates a structure of a network entity according to an embodiment of the disclosure.

### [Mode for Carrying out the Invention]

Hereinafter, the operation principle of the disclosure will be described in detail in conjunction with the accompanying drawings. In describing the disclosure below, a detailed description of relevant known functions or configurations will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification.

For the same reason, in the accompanying drawings, some elements may be exaggerated, omitted, or schematically illustrated. Also, the size of each element does not completely reflect the actual size thereof. In the respective drawings, the same or corresponding elements are assigned the same reference numerals.

The advantages and features of the present disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the specification, the same or like reference signs indicate the same or like elements.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

In describing the disclosure below, a detailed description of known functions or configurations incorporated herein will be omitted when it is determined that the description may make the subject matter of the disclosure unnecessarily unclear. Hereinafter, embodiments of the disclosure will be described with reference to the accompanying drawings.

In the following description, terms for identifying access nodes, terms referring to network entities or network functions (NFs), terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

The terms used in the disclosure are used merely to describe particular embodiments, and may not be intended to limit the scope of other embodiments. A singular expression may include a plural expression unless they are definitely different in a context. The terms used herein, including technical and scientific terms, may have the same meaning as those commonly understood by a person skilled in the art to which the disclosure pertains. Such terms as those defined in a generally used dictionary may be interpreted to have the meanings equal to the contextual meanings in the relevant field of art, and are not to be interpreted to have ideal or excessively formal meanings unless clearly defined in the disclosure. In some cases, even the term defined in the disclosure should not be interpreted to exclude embodiments of the disclosure.

Hereinafter, various embodiments of the disclosure will be described based on an approach of hardware. However, various embodiments of the disclosure include a technology that uses both hardware and software, and thus the various embodiments of the disclosure may not exclude the perspective of software.

In the following description of the disclosure, terms and names defined in LTE and NR standards, which are the standards specified by the 3rd generation partnership project (3GPP) group, will be used for the sake of descriptive convenience. However, the technical idea of the disclosure is not limited by these terms and names, and may be applied in the same way to systems that conform other standards. In particular, the disclosure may be applied to 3GPP NR (5th generation mobile communication standard). Furthermore, embodiments of the disclosure may also be applied to other communication systems having similar technical backgrounds or channel types. Moreover, based on determinations by those skilled in the art, the embodiments of the disclosure may also be applied to other communication systems through some modifications without significantly departing from the scope of the disclosure.

In the case of processing packets which constitute a media stream according to the same policy in a mobile communication system which supports real-time communication services, that is, when a difference in the impact of media data included in each packet on quality of service is not considered, it is not possible to provide an optimal service quality in a given network resource. The disclosure proposes a technology for improving media quality and saving network resources by utilizing a difference in the impact of media data included in each packet on quality of service in a wireless communication system.

In the following description, terms referring to signals, terms referring to channels, terms referring to control information, terms referring to network entities, terms referring to device elements, and the like are illustratively used for the sake of descriptive convenience. Therefore, the disclosure is not limited by the terms as described below, and other terms referring to subjects having equivalent technical meanings may be used.

Furthermore, various embodiments of the disclosure will be described using terms used in some communication standards (e.g., the 3rd generation partnership project (3GPP)), but they are for illustrative purposes only. Various embodiments of the disclosure may also be easily applied to other communication systems through modifications.

Hereinafter, a real-time communication service will be described. A user may use an application provided by a real-time communication application provider to negotiate service configuration information including media information with a real-time media server or another user, and may establish a real-time communication media session, and exchange media data such as audio and video in real time, based on the service configuration information.

In order to provide the real-time communication service, a 5G system (5GS) may include a next-generation radio access network (NG-RAN) and a user plane function (UPF) in a communication path of the real-time communication media session.

A real-time communication service may include media having various transmission characteristics such as voice, video, and text. The network may consider information for identifying a packet including media data and a transmission characteristic for each medium to guarantee a QoS of a real-time communication service. A general communication system defines a packet flow, which is a set of packets for which the same QoS is provided, and configures an operation of a network entity located in a communication path of a media session. Information for configuring the operation of the network entity may include information for identifying a packet belonging to the packet flow and a QoS policy to be applied to the packet belonging to the packet flow. The information for identifying the packet flow includes, for example, a transmission and reception IP address, a transmission and reception port number (e.g., a TCP or UDP port number), and a transmission protocol identifier. For example, in a real-time communication service including voice and video, voice information may be transmitted through a separate packet flow in which a higher QoS is provided when uninterrupted delivery of voice information is important.

Meanwhile, data units which constitute media data may not be preserved in a packetization process for network transmission and may be divided into multiple packets, and when a portion of the data units is damaged or lost depending on the characteristics of a media codec, reconstruction of a media unit at a reception end may be impossible. Therefore, when the network processes each of packets belonging to the media unit independently, a packet which cannot be used by a receiver may be transmitted through the network, which may waste network resources. In addition, data units which constitute media may have different importance and inter-relationships according to media characteristics. For example, in video compression, an intra-frame may also affect reconstruction of other frames which refer to the intra-frame. Therefore, if packets including the intra frame are processed to have a higher priority than packets including frames which refer to the intra-frame, network resources may be used efficiently. The disclosure provides a method capable of processing a media packet in units of data units which constitute media and monitoring a result thereof in order to solve the above-described problem.

A device and a method according to various embodiments of the disclosure described below may enable real-time communication service providers to provide a QoS considering media characteristics when providing a real-time service in a 5G system (5GS).

Advantageous effects obtainable from the disclosure may not be limited to the above-mentioned effects, and other effects which are not mentioned herein may be clearly understood from the following description by those skilled in the art to which the disclosure pertains.

Furthermore, in the following description, terms and names defined in the 5G system standards are used for the sake of descriptive convenience. However, the disclosure is not limited by these terms and names, and may be applied in the same way to systems that conform other standards.

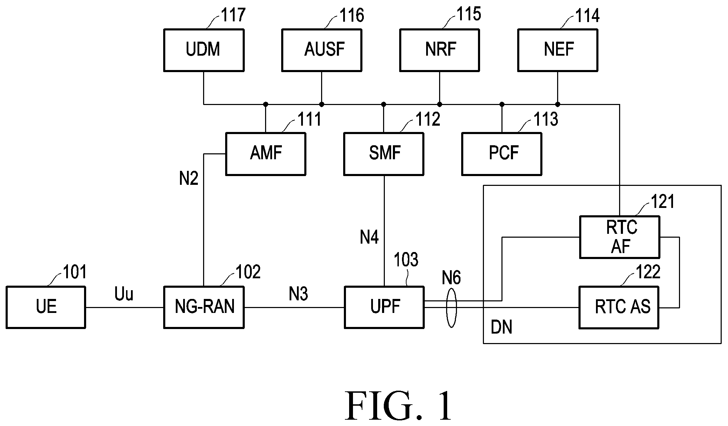

FIG. 1 is a conceptual diagram illustrating a 5G system structure for a real-time communication service in a wireless communication system according to the disclosure.

Referring to FIG. 1, a 5GS may include a user equipment (UE) 101, a NG-RAN 102 including a base station, a user plane function (UPF) device 103, an access and mobility management function (AMF) device 111, a session management function (SMF) device 112, a policy control function (PCF) device 113, a network exposure function (NEF) device 114, an NF repository function (NRF) device 115, an authentication server function (AUSF) device 116, a unified data management (UDM) device 117, a real-time communication application function (RTC AF) device 121, and a real-time communication application server (RTC AS) device 122. The 5GS is not limited to the above example, and may include fewer or more components than those illustrated in FIG. 1. In addition, each device may be referred to as a network entity, a network function, or a network function apparatus.

Referring to FIG. 1, each network function (NF) of the 5GS will be described as a "network entity" or a "network function" itself. However, it will be apparent to those skilled in the art that an NF and/or an NF device may be implemented on a specific one or two or more servers, and that two or more NFs performing the same operation may be implemented on one server.

In addition, according to the disclosure, one NF or two or more NFs may be implemented in the form of a network slice in some cases. A network slice may be generated based on a specific purpose. For example, the network slice may be configured for a subscriber group to provide, to a specific subscriber group, the same type of service such as a maximum transmission rate and data usage, and a guaranteed minimum transmission rate. In addition, the network slice may be implemented according to various purposes. The network slice is well known in the art, and thus a detailed description thereof will be omitted.

Referring to FIG. 1, FIG. 1 illustrates an interface between nodes. A Uu interface may be used between the UE 101 and the NG-RAN 102, an N2 interface may be used between the NG-RAN 102 and the AMF 111, an N3 interface may be used between the NG-RAN 102 and the UPF 103, an N4 interface may be used between the SMF 112 and the UPF 103, and an N6 interface may be used between the UPF 103 and a 5G RTC AF 121, a 5G RTC WSF 122, and a 5G RTC AS 123 located in a data network (DN). The interfaces described above are defined in 3GPP standard specifications, and thus, the descriptions thereof are omitted. An interface between the RTC AF 121, the RTC AS 122, and the UE will be described in a media architecture to be described below.

As described above, data units which constitute media data may not be preserved in a packetization process for network transmission, and may be divided into multiple packets.

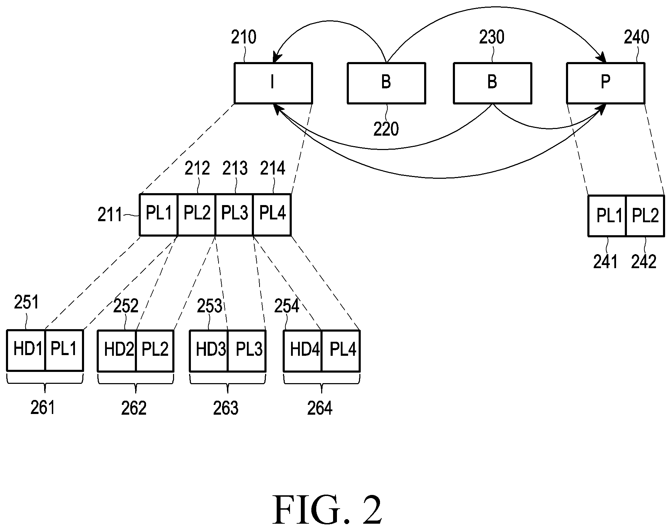

FIG. 2 is a conceptual diagram illustrating a packetization process of a video data unit in a wireless communication system according to the disclosure.

Video data may include a group of pictures (GOP) including pictures such as an intra-coded picture (I picture), a predictive-coded picture (P picture), and a bidirectional-coded picture (B picture), and the group of pictures may include at least one I picture.

Referring to FIG. 2, one group of pictures may include one I frame 210, two B frames 220 and 230, and one P frame 240, and the I frame 210 may be divided into four payloads, PL1 211, PL2 212, PL3 213, and PL4 214, and transmitted as four packets 261, 262, 263, and 264 each including a respective payload. The four packets 261, 262, 263, and 264 may include headers (HD1 251, HD2 252, HD3 253, and HD4 254) which correspond to the payloads (PL1 211, PL2 212, PL3 213, and PL4 214), respectively. Thereafter, a set of payloads divided from one media data unit may be referred to as a PDU set. Referring to FIG. 2, four payloads, the PL1 211, the PL2 212, the PL3 213, and the PL4 214, which configure the I frame 210, may configure one PDU set, and two payloads, PL1 241 and PL 242, which configure the P frame 240, may configure another PDU set.

The packet may include a header and a payload, the header may include information required to process the packet in a network and to transmit the packet to a destination, the payload may include information required to process media data at a reception end, and may include a separate payload header according to a media data processing scheme. The network may use data included in the packet header and the payload to identify the packet.

When the network identifies packets including PDUs belonging to the same PDU set, packet processing may be performed based on the PDU set. For example, when traffic exceeding the processing capacity of the network occurs, a packet loss may occur. In this case, the number of lost PDU sets may be minimized in comparison to the number of lost packets through PDU set-based packet processing, thereby minimizing degradation of service quality. Network equipment supporting the PDU set-based packet processing may require a function of identifying a packet belonging to the same PDU set, and a function of identifying a processing scheme to be applied to a packet belonging to the PDU Set.

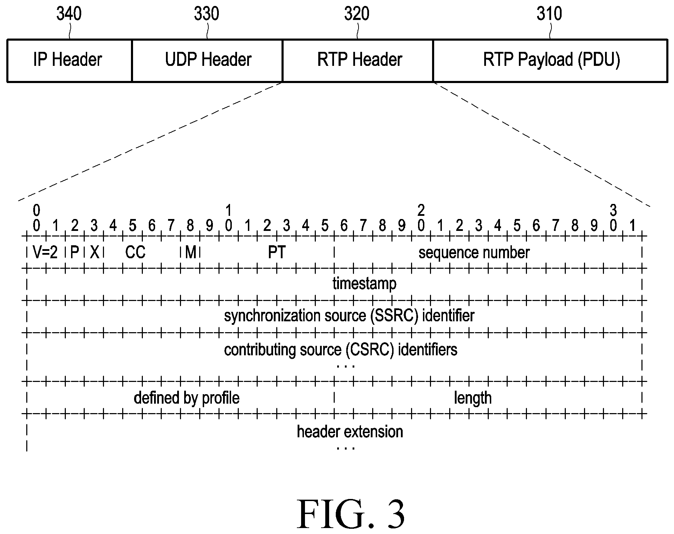

FIG. 3 is a conceptual diagram illustrating an example of a packet header in a wireless communication system according to the disclosure. Referring to FIG. 3, an RTP header 320, a UDP header 330, and an IP header 340 may be added to transmit a PDU 310. The IP header 340 may be an IPv4 header or an IPv6 header according to a version of an Internet protocol (IP). The RTP header 320 may include an RTP extension header. Referring to FIG. 3, the first 12 octets or 12 bytes of the RTP header 320 are included in all RTP packets, and a CSRC list may be added by a mixer. Each field of the RTP header 320 has the following meaning.
- version (V): a 2-bit field indicating a version of an RTP. An RTP following IETF RFC 3550 has a value of 2.
- padding (P): a 1-bit field having a value of 1 when an RTP packet includes a padding octet.
- extension (X): a 1-bit field having a value of 1 when an RTP packet includes an extension header.
- CSRC count (CC): a 4-bit field indicating the number of CSRC identifiers located after a fixed header of 12 octets.
- marker (M): a 1-bit field whose usage is defined by an RTP profile. For example, when one video frame is divided into a plurality of RTP packets and transmitted, only an M field value of the last RTP packet among the RTP packets may be set to 1.
- payload type (PT): a 7-bit field for identifying an RTP payload format. The field value may be determined by using static mapping determined by an RTP profile or dynamic mapping determined by an out-of-band manner using a session description protocol (SDP).
- sequence number: a 16-bit field which increases by 1 each time an RTP packet is transmitted. It may be used by a receiver to detect packet loss and to restore packet order.
- timestamp: a 32-bit field which may indicate a time point at which a data sample included in a corresponding RTP packet is obtained or played back
- SSRC: a 32-bit field indicating an identifier of a synchronization source
- CSRS: a 32-bit field indicating an identifier of a contribution source

A real-time media service according to an embodiment of the disclosure may include one or more media transport sessions, and information on the media transport session may include a 5-tuple (source IP address, destination IP address, source port number, destination port number, and transmission protocol). Therefore, packets which use the RTP/UDP/IP protocol such as the packets shown in FIG. 3 and for which source/destination IP address values of the IP header 340 and source/destination port number values of the UDP header 330 are the same may be considered as packets belonging to one media transport session.

Information for identifying a packet belonging to the PDU set and information for determining a processing scheme to be applied to a packet belonging to the PDU set may be delivered to network equipment through a packet header and a PDU. A media transport session according to an embodiment of the disclosure may deliver the information by using a packet header and a payload header. A specific header and payload format used to deliver the information, and information included in the header and payload may vary depending on the type of protocol used for the media transport session and a profile operating the protocol. Hereinafter, a scheme used to deliver PDU set-related information in the media transport session may be referred to as a PDU set marking scheme. The PDU set marking scheme according to an embodiment of the disclosure may include an RTP extension header. In addition, the PDU set marking scheme may be included in network configuration information supporting PDU set-based packet processing.

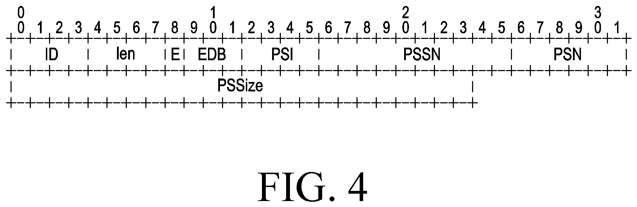

The RTP extension header may be specified as a uniform resource identifier (URI). FIG. 4 illustrates an example of an RTP extension header according to an embodiment of the disclosure. For example, in an extension header for PDU set marking of an RTP extension header in FIG. 4, the URI of the extension header may be "urn:3gpp:pdu-set-marking:rel-18". Referring to FIG. 4, the format and usage of each field of the extension header are as follows:
- ID (4 bits): a local identifier of an RTP extension header
- len (4 bits): a value obtained by subtracting 1 from the byte-based length of the RTP extension header following this field. For example, a value of 0 in the len field indicates that there is 1 byte of data hereafter.
- End PDU of the PDU Set[E] (1 bit): a flag which has a value of 1 only when the PDU is the last PDU of the PDU set, and has a value of 0 in other cases
- End of Data Burst [EDB] (3 bits): a 3-bit field indicating the end of a data burst.
- PDU Set Importance [PSI] (4 bits): a field indicating the relative importance of an associated PDU set. A smaller value indicates higher importance.
- PDU Set Sequence Number [PSSN] (10 bits): indicates a serial number of the associated PDU set.
- PDU Sequence Number within a PDU Set [PSN] (6 bits): indicates a serial number of an associated PDU in a PDU set.
- PDU Set Size [PSSize] (24 bits): indicates the byte-based length of the associated PDU set. This field may optionally exist, and whether the field exists may be determined in an SDP negotiation process.

A value of the ID field and the existence of a PSSize field may be determined in an SDP negotiation process. For example, an m-line (media description) of a negotiated SDP may include the following extmap attribute.
a = extmap: 1 "urn:3gpp:pdu-set-marking:rel-18" pdu-set-size

This means that an RTP stream included in the m-line including the extmap attribute may include an RTP extension header identified as "urn:3gpp:pdu-set-marking:rel-18", and in this case, an ID field value of the RTP extension header may be set to "1", and the existence of a PSSize field may be indicated.

The byte-based size of the PDU set delivered by the PDU set size (PSSize) field may include the size of a packet header. Referring to FIG. 2, the I frame 210 may be divided into four payloads, the PL1 211, the PL2 212, the PL3 213, and the PL4 214, and transmitted as four packets 261, 262, 263, and 264 including respective payloads. In this case, a value of the PSSize field may be calculated as the sum of the lengths of the four packets 261, 262, 263, and 264, which may include the lengths of the respective payloads (PL1 211, PL2 212, PL3 213, and PL4 214) and the headers (HD1 251, HD2 252, HD3 253, and HD4 254) corresponding thereto.

A NAT refers to a network address translation (NAT) device capable of exchanging network traffic through a router while rewriting source and destination IP addresses and a port number of a socket address recorded in an IP packet. A first host assigned only a private IP address may exchange packets with a second host by using a public IP address assigned to the NAT. Depending on a mapping scheme and a network structure between a private IP address and a public IP address of the NAT, the first host and the second host may not be able to exchange packets directly. In this case, the first host and the second host may exchange packets through a third host which provides a relay function. The third host may be located in a public network, and may relay packets between the first host and the second host connected to the public network through the NAT. Hereinafter, a combination of an IP address and a port number is referred to as a transport address.

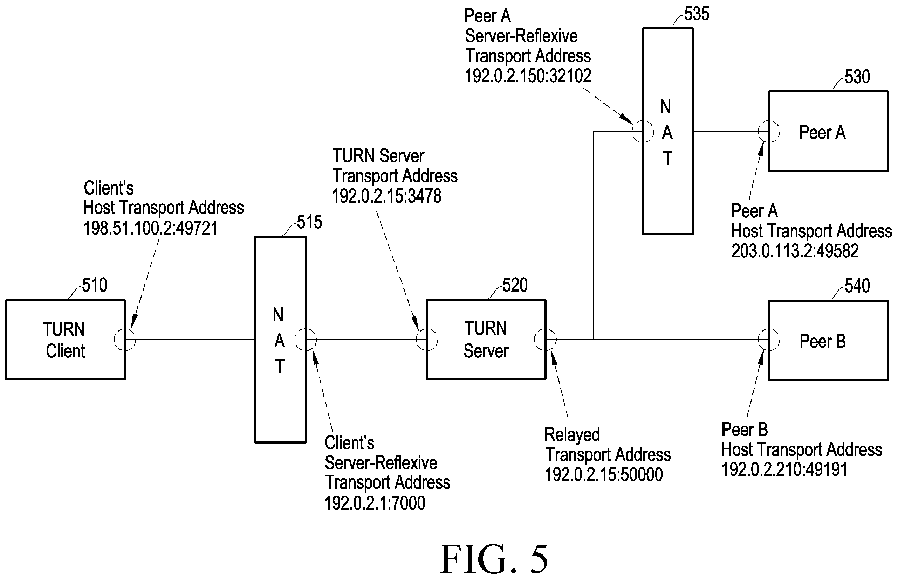

FIG. 5 is a conceptual diagram illustrating an example of a relay server operation in a wireless communication system according to the disclosure. A traversal using relays around NAT (TURN; IETF RFC 8656) is a communication protocol for a TURN client 510 to use a relayed transport address assigned by a TURN server, and is an extension of a session traversal utilities for NAT (STUN; IETF RFC 8489) protocol.

STUN is a client-server protocol and supports two types of transactions. The first is a request/response transaction, in which a client sends a request to a server and the server replies with a response. The second is an indication transaction, in which a client or a server transmits an indication to the other party without generating a response.

Referring to FIG. 5, the TURN client 510 may exist in a private network, and may be connected to a TURN server 520 located in a public network through a NAT 515. The TURN client 510 may attempt to communicate with the TURN server 520 by using a host transport address, which is a combination of an IP address and a port number. The TURN client 510 may transmit a TURN message to a TURN server transport address of the TURN server 520 from the host transport address. Since the TURN client 510 is located behind the NAT 515, the TURN server 520 perceives packets transmitted by the TURN client 510 as packets transmitted from a server-reflexive transport address of the NAT 515. In this case, packets transmitted by the TURN server 520 to the server-reflexive transport address may be delivered by the NAT 515 to the host transport address of the TURN client 510.

The TURN client 510 may generate and control an ALLOCATION on the TURN server 520 by using a TURN command. The ALLOCATION may include a relayed transport address associated with a data structure existing in the TURN server 520. The relayed transport address may be one of transport addresses of the TURN server 520, and may be used by other peers 530 and 540 to transmit packets to the TURN client 510.

Once the ALLOCATION is generated, the TURN client 510 may transmit, to the TURN server 520, application data indicating an intended receiving peer, and the TURN server 520 may relay the application data to the intended peer. In this case, the TURN client 510 may encapsulate the application data into a TURN message and transmit the TURN message to the TURN server 520, and the TURN server 520 may extract the application data from the received TURN message and transmit the application data to the peer as a UDP datagram. In the opposite case, a peer transmits a UDP datagram to the relayed transport address associated with the ALLOCATION, and the TURN server 520 encapsulates the received data into a TURN message indicating the peer having transmitted the data, and deliver the TURN message to the TURN client 510. Since a TURN message always indicates a communicating peer, the TURN client 510 may communicate with one or more peers by using one ALLOCATION.

When identifying a peer located behind the NAT, the TURN client uses a server-reflexive transport address rather than a host transport address of the peer. Referring to FIG. 5, in order for the TURN client 510 to transmit application data to peer A 530, the TURN client is required to use the server-reflexive transport address (192.0.2.150:32102), rather than the host transport address (203.0.113.2:49582) of the peer A 530.

In a communication system according to an embodiment of the disclosure, the TURN server may relay application data of the TURN client by using a Send/Data indication. In this case, the Send indication is used when the client transmits application data to the server, and the Data indication is used when the server transmits application data to the client.

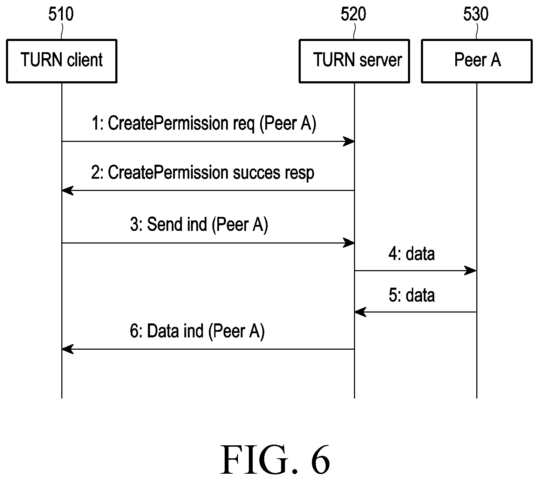

FIG. 6 is a flowchart illustrating an example of an application data relay procedure using a Send/Data indication in a communication system according to an embodiment of the disclosure. It is assumed that the TURN client 510 has already generated an ALLOCATION before the procedure of FIG. 6 starts. The ALLOCATION may include zero or more PERMISSIONs, and each PERMISSION may include an IP address and a validity time (lifetime). When receiving a packet, a TURN server may check a list of PERMISSIONs, and may deliver only packets having a source IP address included in the list to the TURN client. Referring to FIG. 6, the TURN client 510 and the peer A 530 may exchange data through the following procedures:
Step 1: The TURN client 510 transmits a CreatePermission request to the TURN server 520 to generate a PERMISSION. In this case, the CreatePermission request includes a (server reflexive) transport address of the peer A 530.
Step 2: The TURN server 520 transmits a response to a PERMISSION generation request to the TURN client 510.
Step 3: The TURN client 510 transmits application data to be transmitted to the peer A 530 to the TURN server 520 by using a Send indication.
Step 4: The TURN server 520 extracts application data of the Send indication and transmits the application data as a datagram toward the peer A 530. In this case, a source transport address is set to a relayed transport address.
Step 5: A datagram transmitted by the peer A 530 is received at a relayed transport address.
Step 6: The TURN server 520 delivers a Data indication including the received datagram to the TURN client 510.

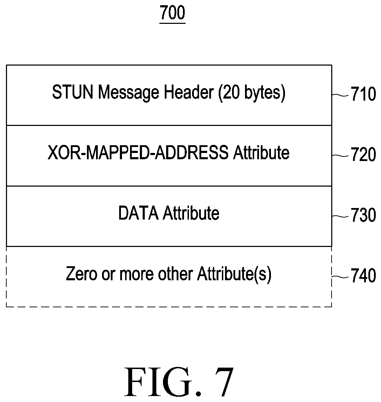

FIG. 7 is a conceptual diagram illustrating a structure of a STUN message including a Data indication in a communication system according to an embodiment of the disclosure. Referring to FIG. 7, a STUN message 700 may include a STUN message header 710, an XOR-MAPPED-ADDRESS attribute 720, and a DATA attribute 730, and may further include an optional attribute 740. The STUN message header has a length of 20 bytes, and includes a STUN message type, a message length, a magic cookie, and a transaction identifier. A STUN message type value of the STUN message header 710 is used to identify the type of the message, and for example, a Data indication may have a value of 0x007 as a STUN message type. The XOR-MAPPED-ADDRESS attribute 720 includes a source transport address of a UDP datagram received at a relayed transport address, and a DATA attribute includes a payload of the received UDP datagram. For example, it is assumed that the datagram transmitted by the peer A 530 in step 5 of the above-described embodiment of FIG. 6 includes an RTP packet. In this case, a DATA attribute of the Data indication in step 6 includes the RTP packet, and the XOR-MAPPED-ADDRESS attribute includes a server-reflexive transport address of the peer A 530. The Data indication is transmitted from a TURN server transport address of the TURN server 520 to a server-reflexive transport address of a TURN client, and may be finally delivered to a host transport address of the TURN client by the NAT 515.

In a communication system according to an embodiment of the disclosure, a Data indication transmitted by the TURN server 520 may include a 3GPP-PDU-SET-MARKING attribute including PDU set marking information. For example, the 3GPP-PDU-SET-MARKING attribute may have the same value as an RTP extension header for PDU set marking of an RTP packet included in the DATA attribute of the Data indication. In this case, the TURN server 502 may extract the RTP extension header by using a local identifier assigned to the RTP extension header for PDU set marking, and may generate a Data indication including the 3GPP-PDU-SET-MARKING attribute by using the value. The TURN client 510 according to an embodiment of the disclosure may include a 3GPP-PDU-SET-INFO attribute including information related to the local identifier of the RTP extension header when generating a PERMISSION. For example, the 3GPP-PDU-SET-INFO attribute may provide local identifier information of the RTP extension header for each PERMISSION (IP address). For another example, the 3GPP-PDU-SET-INFO attribute may provide, for each PERMISSION (IP address), one or more pairs of a port number and local identifier information of the RTP extension header.

The above-described Data indication may have a total overhead of 36 bytes, including, for example, a STUN message header length of 20 bytes, an XOR-MAPPED-ADDRESS attribute header of 4 bytes, an XOR-MAPPED-ADDRESS attribute value of 8 bytes (based on IPv4), and a DATA attribute header of 4 bytes. Depending on the application (e.g., Voice over IP service), overhead caused by the use of a Send/Data indication may affect the quality of service. In this case, the TURN server may relay application data of the TURN client by using a channel data (ChannelData) message. The channel data message does not use the STUN message header described above, and uses a channel data header having a length of 4 bytes. The channel data header includes a channel number field having a length of 2 bytes and an application data length field having a length of 2 bytes. Each channel number is assigned to a specific peer, which means that the channel number may be used as a shorthand for a host transport address (or a server-reflexive transport address) of the peer.

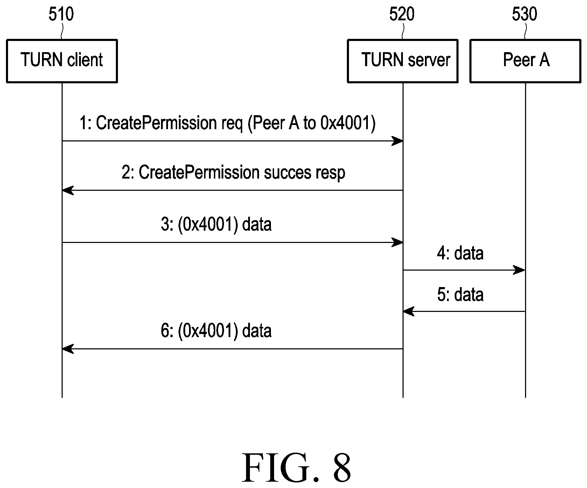

FIG. 8 is a flowchart illustrating an example of an application data relay procedure using a channel message in a communication system according to an embodiment of the disclosure. It is assumed that the TURN client 510 has already generated an ALLOCATION before the procedure of FIG. 8 starts. Referring to FIG. 8, the TURN client 510 and the peer A 530 may exchange data through the following procedures:
Step 1: The TURN client 510 transmits a ChannelBind request to the TURN server 520 to generate a channel. In this case, the ChannelBind request includes a (server reflexive) transport address of the peer A 530 and a channel number (0x4001).
Step 2: The TURN server 520 transmits a response to the ChannelBind request to the TURN client 510.
Step 3: The TURN client 510 encapsulates application data to be transmitted to the peer A 530 into a channel data message and transmits the channel data message to the TURN server 520. The channel data message includes channel number 0x4001 bound to the peer A 530 in step 1.
Step 4: The TURN server 520 extracts application data of the channel data message and transmits the application data as a UDP datagram toward the peer A 530.
Step 5: A datagram transmitted by the peer A 530 is received at a relayed transport address.
Step 6: Since a channel number bound to the peer A 530 exists, the TURN server 520 encapsulates the received datagram into a channel message and delivers the channel message to the TURN client 510.

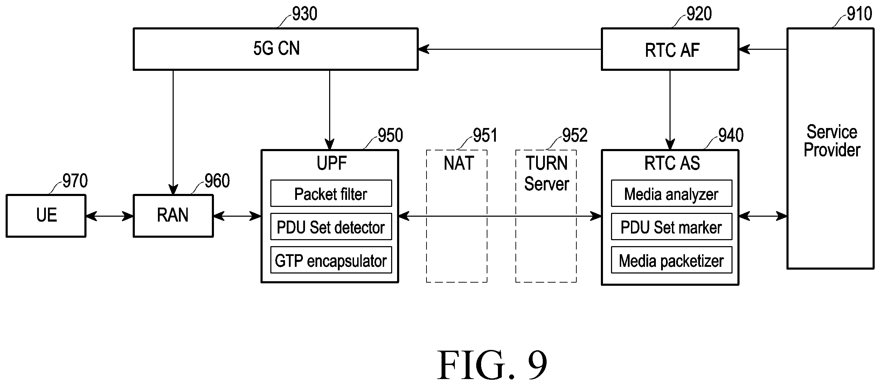

FIG. 9 is a conceptual diagram illustrating 5G system configuration information and user data flow for a real-time communication service in a wireless communication system according to various embodiment of the disclosure.

Referring to FIG. 9, an RTC AF 920 may request a 5G CN 930 to establish a real-time media transport session including a QoS configuration parameter, based on service configuration information provided by a service provider 910. The QoS configuration parameter may include information on a PDU set marking scheme. If the session establishment request is successful, the RTC AF 920 may configure an RTC AS 940 to perform the role of a stream termination server, and the 5G CN 930, for example, a PCF or NEF, may configure a UPF 950 and a RAN 960 located in a path of a real-time communication media session. When a service is initiated, the RTC AS 940 may transmit a media packet to which PDU set marking is applied to the UPF 950. The PDU set marking may include a media analysis process, a PDU set-related information configuration process, and a packetization process. The UPF 950 having received the media packet may identify packets included in the real-time communication media session by using a packet filter, and may identify a PDU set by using PDU set marking scheme information included in configuration information of the 5G CN 930, and process the packet. Thereafter, a packet to which a GTP header is added may be delivered to the RAN 960, and when the RAN 960 provides PDU set-based packet processing, PDU set-related information may be added to the GTP header. The PDU set marking may include information on the byte-based size of a PDU set. The information on the byte-based size of the PDU set may be used for, for example, a buffer configuration of the UPF 950 or the RAN 960 for PDU set unit processing, or packet scheduling in consideration of network congestion.

A UE 970 may be the same as or similar to the UE 101 of FIG. 1. The RAN 960 may be the same as or similar to the NG-RAN 102 of FIG. 1. The UPF 950 may be the same as or similar to the UPF 103 of FIG. 1. The RTC AS 940 may be the same as or similar to the RTC AS 122 of FIG. 1. The RTC AF 620 may be the same as or similar to the RTC AF 121 of FIG. 1.

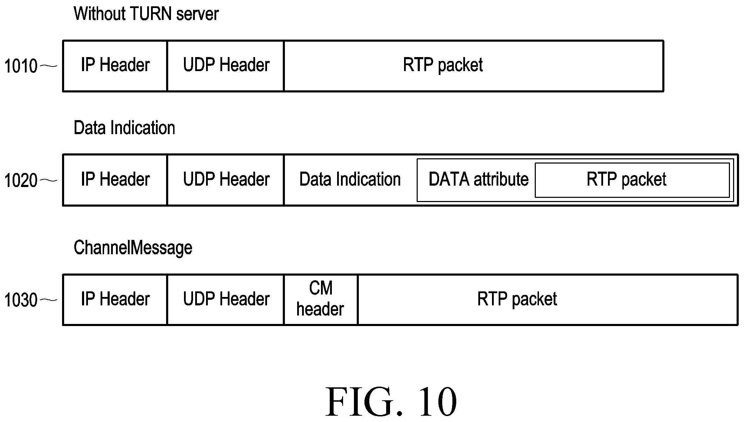

Referring to FIG. 9, a NAT 951 and a TURN server 952 may exist on a media transmission path between the UPF 950 and the RTC AS 940. It is assumed that the RTC AS 940 transmits media data by using an RTP packet, and delivers PDU set-related information by using, for example, the RTP extension header shown in FIG. 4. In this case, a format of a packet actually received by the UPF 950 may vary depending on whether the TURN server 952 is used and a configuration thereof. FIG. 10 is a conceptual diagram illustrating an example of packet formats received by a UPF in a communication system according to an embodiment of the disclosure. Referring to FIG. 10, a received packet 1010 in a case where a TURN server is not used includes an IP header, a UDP header, and an RTP packet, and the RTP packet includes an RTP extension header for delivering PDU set-related information. A received packet 1020 in a case where the TURN server 952 relays a packet transmitted by the RTC AS 940 by using a Data indication includes an IP header, a UDP header, and a Data indication, and an RTP packet is included in a DATA attribute of the Data indication. Therefore, in order for the UPF 950 to extract an RTP extension header including PDU set-related information, the UPF is required to recognize the format of the Data indication and the DATA attribute described above. A received packet 1030 in a case where the TURN server relays a packet transmitted by the RTC AS 940 by using a ChannelData message includes an IP header, a UDP header, a channel data message header (CM header), and an RTP packet. Therefore, in order for the UPF 950 to extract an RTP extension header including PDU set-related information, the UPF is required to recognize the format of the channel data message header.

In a communication system according to an embodiment of the disclosure, a Data indication transmitted by the TURN server 520 may include a 3GPP-PDU-SET-MARKING attribute including PDU set marking information. In this case, instead of extracting an RTP extension header including PDU set-related information in a DATA attribute, the UPF 950 having received the Data indication may use a 3GPP-PDU-SET-MARKING attribute value to obtain PDU set-related information.

Therefore, in the communication system according to an embodiment of the disclosure, the PDU set marking information may include TURN configuration information. The TURN configuration information may include information on whether a TURN server is used, and may include information on whether a ChannelData message is used when the TURN server is used. Further, when the ChannelData message is used, information on a bound channel number may be included in the TURN configuration information. The TURN configuration information may further include information related to a validity time (lifetime) associated with PERMISSION and ChannelBind. The TURN configuration information may include information on whether PDU set marking information is separately provided as an attribute when a Data indication is used.

In the communication system according to an embodiment of the disclosure, PDU set marking information may be dynamically updated during a session. For example, the TURN server 952 may change a packet relaying scheme from a Data indication to a ChannelData message during a session.

In the communication system according to an embodiment of the disclosure, an RTC AF may collect TURN configuration information for each media stream from a TURN client or a TURN server, and provide the information to a 5GC. In this case, the information delivered by the RTC AF to the 5GC may be all or a part of the information collected from the TURN client or the TURN server, and the format of the information may also vary.

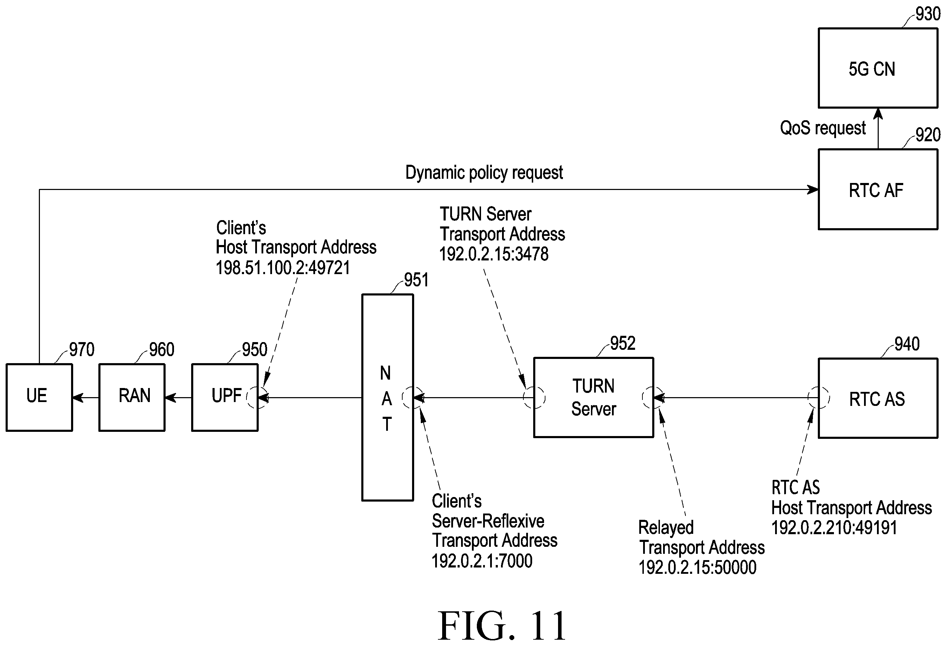

FIG. 11 is a conceptual diagram illustrating an example of a PDU set marking information signaling path in a wireless communication system according to an embodiment of the disclosure.

Referring to FIG. 11, the RTC AS 940 may transmit media data as an RTP packet having, as a destination, a relayed transport address (192.0.2.15:50000) of the UE 970. The RTP packet may be encapsulated as a Data indication or a ChannelData message by the TURN server 952 and may be delivered to the UE 970 through the UPF 950 and the RAN 960. In this case, a source transport address of a UDP/IP packet including the Data indication or ChannelData message received by the UPF 950 may be set to a TURN server transport address (192.0.2.15:3478), and a destination transport address may be set to a host transport address (198.51.100.2:49721). A service data flow refers to a packet flow in which a source IP address, a destination IP address, a source port number, a destination port number, and a protocol (e.g., UDP) are the same, and in the embodiment illustrated in FIG. 11, packets including RTP packets transmitted from the TURN server transport address to the host transport address may correspond to one service data flow.

Before establishing a media data transmission session or during the session, the UE 970 may request a dynamic policy to be applied to a service data flow to the RTC AF 920, and the RTC AF 920 may provide a parameter for a QoS configuration to the 5G CN 930, based on the dynamic policy request. In a communication system according to an embodiment of the disclosure, the dynamic policy and the QoS configuration parameter may include PDU set marking-related information. In addition, the PDU set marking-related information may include TURN configuration information.

For example, the dynamic policy request may include at least one of the following pieces of information in [Table 1] below.

**[Table 1]**

| **Property name** | **Data type** | **Description** |
|---|---|---|
| dynamicPolicyId | ResourceId | Dynamic Policy identifier |
| policyTemplateId | ResourceId | associated Policy Template identifier |
| provisioningSessionId | ResourceId | associated Provisioning Session identifier |
| qosSpecification | RTCQoSSpecification | QoS-related attributes |
| serviceDataFlowDescription | ServiceDataFlowDescription | Service data flow identification information requesting QoS dynamic policy (source/destination IP addresses, source/destination port numbers, protocol) |
| mediaIdentifier | String | Identifier of associated media stream |
| marBwDlBitRate | BitRate | Maximum requested bit rate for downlink |
| marBwUlBitRate | BitRate | Maximum requested bit rate for uplink |
| minDesBwDlBitRate | BitRate | Minimum desired bit rate for downlink |
| minDesBwUlBitRate | BitRate | Minimum desired bit rate for uplink |
| mirBwDlBitRate | BitRate | Minimum requested bit rate for downlink |
| mirBwUlBitRate | BitRate | Minimum requested bit rate for uplink |
| desLatency | Integer | Desired latency |
| desLoss | Integer | Desired packet loss rate |
| pduSetMarking | PDUSetMarking | PDU Set Marking-related information |

As described above, a service data flow described by a serviceDataFlowDescription object in [Table 1] may refer to a packet flow transmitted from a TURN server transport address to a host transport address. In this case, the service data flow may be considered as media transport sessions multiplexed between the RTC AS 940 having an IP address included in a PERMISSION of an associated ALLOCATION and a relayed transport address of the ALLOCATION. Therefore, a PDUSetMarking data structure in [Table 1] may vary depending on the number of the multiplexed media transport sessions and configuration information thereof.

For example, all media transport sessions delivered to a relayed transport address associated with the ALLOCATION may have the same RTP extension header configuration information for PDU set marking. The RTP extension header configuration information may be, for example, a global identifier and a local identifier. A PDUSetMarking object in [Table 1] may include at least one of the following pieces of information in [Table 2] below.

**[Table 2]**

| **Property name** | **Data type** | **Description** |
|---|---|---|
| serviceDataFlowDescription | ServiceDataFlowDescription | Service data flow identification information to which PDU Set Marking is applied (source/destination IP addresses, source/destination port numbers, protocol) |
| headerExtensionUri | String | Global identifier (URI) of RTP extension header for PDU Set Marking |
| localIdentifier | Integer | Local identifier of RTP extension header for PDU Set Marking (ID field value of RTP extension header) |
| format | Boolean | RTP extension header format. (short or long) If not present, both formats may be used. |
| turnActive | Boolean | Whether TURN server is used. For example, value of 0 indicates that TURN server is not used, and value of 1 indicates that TURN server is used. |
| turnChannelDataMsg | Boolean | Packet format transmitted by TURN server. For example, value of 0 indicates that only Data Indication is used, and value of 1 indicates that ChannelData message is used. The absence of this property may indicate that TURN server is not used. |
| turnChannelNumber | Array of Integers | Channel number when associated service data flow includes ChannelData message. The absence of this property or specific value (e.g., 0) may indicate that ChannelData message is not used. |
| stunPDUSetMarking | bool | Whether Data Indication includes PDU Set Marking information. For example, Data Indication including PDU Set Marking information may include above-described 3GPP-PDU-SET-MARKING attribute. When Data Indication includes PDU Set Marking information, localIdentifier attribute may be omitted. |
| lifeTime | DateTime | Lifetime of PERMISSION or ChannelBind provided by TURN server. LifeTime for PERMISSION and lifetime for ChannelBind may be provided separately. |

For example, RTP extension header configuration information for PDU set marking of media transport sessions delivered to a relayed transport address associated with an ALLOCATION may differ for each PERMISSION. In this case, the PDUSetMarking object in [Table 1] may include at least one of the following pieces of information in [Table 3] below.

**[Table 3]**

| **Property name** | **Data type** | **Description** |
|---|---|---|
| serviceDataFlowDescription | ServiceDataFlowDescription | Service data flow identification information to which PDU Set Marking is applied (source/destination IP addresses, source/destination port numbers, protocol) |
| turnActive | Boolean | Whether TURN server is used. For example, value of 0 indicates that TURN server is not used, and value of 1 indicates that TURN server is used. |
| turnChannelDataMsg | Boolean | Packet format transmitted by TURN server. For example, value of 0 indicates that only Data Indication is used, and value of 1 indicates that ChannelData message is used. The absence of this property may indicate that TURN server is not used. |
| pduSetMarkingPermission | Array of PDUSetMarkingPermissionoi | PDU Set Marking-related information for each permission |
| lifeTime | DateTime | lifeTime of ALLOCATION provided by TURN server |

The PDUSetMarkingPermission information in [Table 3] may include at least one of the following pieces of information in [Table 4] below.

**[Table 4]**

| **Property name** | **Data type** | **Description** |
|---|---|---|
| permissionIPAddress | String | Peer IP address associated with permission |
| headerExtensionUri | String | Global identifier (URI) of RTP extension header for PDU Set Marking |
| localIdentifier | Integer | Local identifier of RTP extension header for PDU Set Marking (ID field value of RTP extension header) |
| format | Boolean | RTP extension header format. (short or long) If not present, both formats may be used. |
| turnChannelDataMsg | Boolean | Packet format transmitted by TURN server. For example, value of 0 indicates that only Data Indication is used, and value of 1 indicates that ChannelData message is used. The absence of this property may indicate that TURN server is not used. |
| turnChannelNumber | Array of Integers | Channel number when associated service data flow includes ChannelData message. The absence of this property or specific value (e.g., 0) may indicate that ChannelData message is not used. |
| stunPDUSetMarking | bool | Whether Data Indication includes PDU Set Marking information. For example, Data Indication including PDU Set Marking information may include above-described 3GPP-PDU-SET-MARKING attribute. |
| lifeTime | DateTime | Lifetime of PERMISSION or ChannelBind provided by TURN server. LifeTime for PERMISSION and lifetime for ChannelBind may be provided separately. |

As described above, the RTC AF 920 may provide a parameter for a QoS configuration to the 5G CN 930, based on a dynamic policy received from the UE 970. The QoS configuration parameter may include the PDUSetMarking object in [Table 2].

The 5G CN 630 having received the QoS configuration parameter may determine a packet processing policy of a 5G network, based on the parameter, and may notify the result to the RTC AF 620. For example, the packet processing policy of the 5G network may be delivered to the UPF 650 which processes a user packet through the PCF 113 or NEF 114. The packet processing policy may include PDU set marking-related information, and the PDU set marking information may be used by the UPF 650 to identify an RTP extension header in a received packet and to interpret each parameter included in the identified RTP extension header. The UPF 650 may process an associated packet by using the interpreted PDU set marking-related information, and may generate information for subsequent packet processing in the RAN 660 and deliver the information to the RAN 660.

In the communication system according to an embodiment of the disclosure, the RTC AF 920 may directly deliver all or a part of the PDU set marking-related information to the UPF 950. For example, when a new ChannelBind transaction occurs between the TURN server 952 and a TURN client (UE), a result of the occurrence may be notified to the UPF 950 via the RTC AF 920 from the UE 970 or the TURN server 952.

In the above-described embodiment, the UE 970 delivers dynamic policy information to the RTC AF 920, but a network entity associated with a real-time communication service, such as the TURN server 952 or the RTC AS 940, may deliver the dynamic policy information to the RTC AF 920 according to a network and service configuration.

In the communication system according to an embodiment of the disclosure, PDU set-related information may include information on the byte-based size of a PDU set (PSSize), and the PSSize may be calculated in consideration of the length of a packet header. As described above, even when the RTC AS 940 transmits the IP/UDP/RTP packet 1010 of FIG. 10, a structure of a packet actually received by the UPF 950 may differ therefrom. Therefore, in order for an RTP transmission device (RTC AS) to provide the PSSize based on the amount of data actually processed by the UPF 950, it is necessary to obtain TURN configuration information.

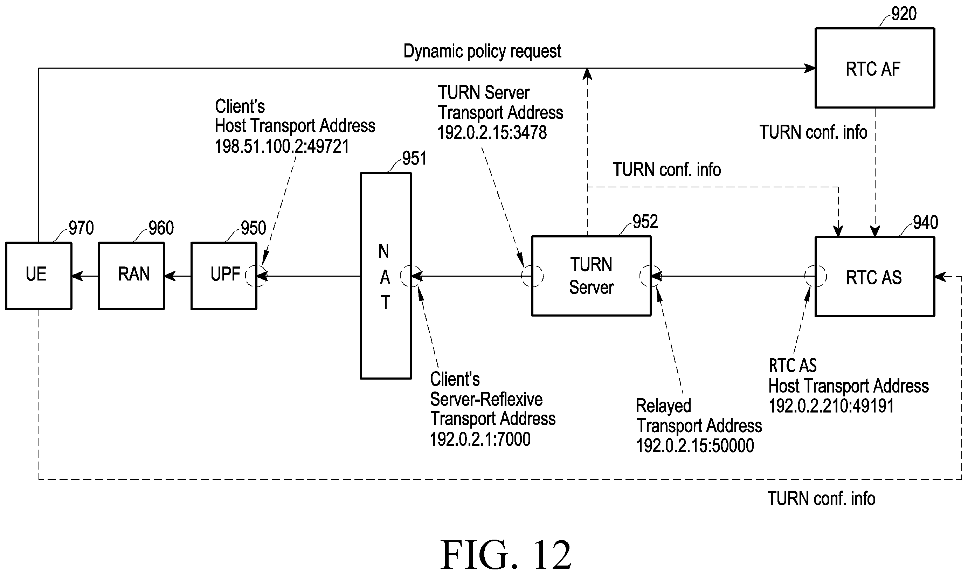

FIG. 12 illustrates an example of a TURN configuration information signaling path in a communication system according to an embodiment of the disclosure. Referring to FIG. 12, TURN configuration information may be delivered to the RTC AS 920 which serves as an RTP transmission device through at least one of the following transmission paths:
- Path 1: The RTC AF 920 delivers information collected from the UE 970 to the RTC AS 940.
- Path 2: The RTC AF 920 delivers information collected from the TURN server 952 to the RTC AS 940.
- Path 3: The TURN server 952 directly delivers the information to the RTC AS 940.
- Path 4: The UE 970 directly delivers the information to the RTC AS 940.

The TURN configuration information may be a PDUSetMarking object including at least one of the pieces of the information in [Table 2]. The TURN configuration information delivered through the path 4 may be delivered through a media session of the UE 970 and the RTC AS 940, which is described by an SDP, or may be delivered through a separate protocol. When the TURN configuration information is delivered through the media session, the TURN configuration information may be encapsulated and delivered using at least one of an RTP extension header, an RTCP feedback message, or a data channel.

The RTC AS 920 having obtained the TURN configuration information may recognize a packet format to be actually input to the UPF 950, based on the information, and may calculate a PSSize value in consideration thereof and provide the calculated PSSize value as PDU set-related information. For example, a PSSize value calculated based on a packet to be transmitted by the RTC AS 920 may be referred to as PSSize_Base. When the TURN server 952 is not used, the PSSize value is the same as PSSize_Base. If the number of packets included in a PDU set is N_PDUSet, PSSize may be calculated as PSSize_Base + 36*N_PDUSet when the TURN server 952 uses a Data indication. Similarly, when the TURN server 952 uses a channel data message, PSSize may be calculated as PSSize_Base + 4*N_PDUSet.

In a communication system according to an embodiment of the disclosure, the RTC AS 920 may always provide a PSSize_Base value, and the UPF 950 may calculate PSSize, based on the TURN configuration information, and use the calculated PSSize for PDU set-based packet processing of the UPF 950. In addition, when delivering PDU set-related information to the RAN 660, the PSSize value may be delivered through a separate GTP header field.

In the above-described embodiments, the TURN configuration information is described as a part of the PDU Set Marking information, however, depending on an implementation, the TURN configuration information may be delivered as an independent data structure. In addition, the TURN configuration information may be delivered in the form of a string including one or more properties. For example, TURN/RTP/UDP or ICE/RTP/UDP may be used to signal that a TURN server is used or may be used.

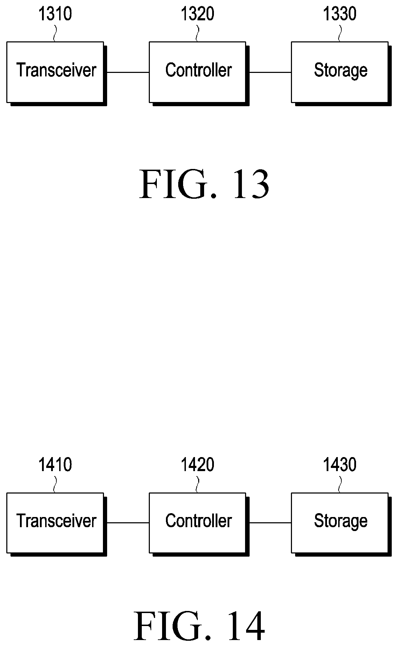

FIG. 13 illustrates a structure of a UE according to an embodiment of the disclosure.

In the embodiment of FIG. 13, the UE may be the UE (or terminal or user device) described above in FIGS, 1 to 12.

Referring to FIG. 13, the UE may include a transceiver 1310, a controller 1320, and a storage 1330. As used herein, the controller may be defined as a circuit, an application specific integrated circuit, or at least one processor.

The transceiver 1310 may transmit/receive signals with other network entities.

The controller 1320 may control the overall operation of the UE according to the embodiments proposed in the disclosure. For example, the controller 1320 may control signal flows between the respective blocks to perform operations according to the above-described flowcharts. Specifically, the controller 1320 may control, for example, the operation of the UE as described with reference to FIGS. 1 to 12.

In addition, the storage 1330 may store at least one of information transmitted/received through the transceiver 1310 and information generated through the controller 1320. For example, the storage 1330 may store information and data necessary for the methods described with reference to FIGS. 1 to 12.

According to an embodiment, the controller 1320 may receive, from a base station, a real-time transport protocol (RTP) packet transmitted from a real-time communication application server (RTC AS). The controller 1320 may transmit, to a real-time communication application function (RTC AF), a message requesting a dynamic policy to be applied to a service data flow related to the RTP packet. A parameter for configuring a quality of service (QoS) may be provided from the RTC AF to a core network based on the message requesting the dynamic policy.

According to an embodiment, the message requesting the dynamic policy may include at least one of an identifier for the dynamic policy, an associated policy template identifier, an associated provisioning session identifier, service data flow identification information for requesting a QoS dynamic policy, an identifier of an associated media stream, and protocol data unit (PDU) set marking-related information.

According to an embodiment, the PDU set marking-related information may include at least one of service data flow identification information to which the PDU set marking is applied, a global identifier of an RTP extension header for the PDU set marking, a local identifier of the RTP extension header for the PDU set marking, information on whether a traversal using relays around NAT (TURN) server is used, and a packet format transmitted by the TURN server.

FIG. 14 illustrates a structure of a network entity according to an embodiment of the disclosure.

In the embodiment of FIG. 14, the network entity may be implemented as one of the RTC AS, TURN server, NAT, UPF, RAN, RTC AF, and 5G CN described in FIGS, 1 to 12. The network entity may be implemented as one of the network entities illustrated in FIGS. 1 to 12.

Referring to FIG. 14, the network entity may include a transceiver 1410, a controller 1420, and a storage 1430. As used herein, the controller may be defined as a circuit, an application specific integrated circuit, or at least one processor.

The transceiver 1410 may transmit/receive signals with other network entities.

The controller 1420 may control the overall operation of the network entity according to the embodiments proposed in the disclosure. For example, the controller 1420 may control signal flows between the respective blocks to perform operations according to the above-described flowcharts. Specifically, the controller 1420 may control, for example, the operation of the network entity as described with reference to FIGS. 1 to 12.

In addition, the storage 1430 may store at least one of information transmitted/received through the transceiver 1410 and information generated through the controller 1420. For example, the storage 1430 may store information and data necessary for the methods described with reference to FIGS. 1 to 12.

Methods disclosed in the claims or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

The embodiments of the disclosure described and shown in the specification and the drawings are merely specific examples that have been presented to easily explain the technical contents of the disclosure and help understanding of the disclosure, and are not intended to limit the scope of the disclosure. That is, it will be apparent to those skilled in the art that other variants based on the technical idea of the disclosure may be implemented. Also, the above respective embodiments may be employed in combination, as necessary. For example, a part of one embodiment of the disclosure may be combined with a part of another embodiment to operate a base station and a terminal. In addition, the embodiments of the disclosure may also be applied to other communication systems and other variants based on the technical idea of the embodiments may also be implemented. For example, the embodiments may be applied to LTE, 5G, or NR systems.

## Claims

1. A method for operating a user equipment (UE) in a wireless communication system, the method comprising:
receiving, from a base station, a real-time transport protocol (RTP) packet transmitted from a real-time communication application server (RTC AS); and
transmitting, to a real-time communication application function (RTC AF), a message requesting a dynamic policy to be applied to a service data flow related to the RTP packet,
wherein a parameter for configuring a quality of service (QoS) is provided from the RTC AF to a core network based on the message requesting the dynamic policy.

2. The method of claim 1, wherein the message requesting the dynamic policy comprises protocol data unit (PDU) set marking-related information.

3. The method of claim 2, wherein the message requesting the dynamic policy further comprises at least one of an identifier for the dynamic policy, an associated policy template identifier, an associated provisioning session identifier, service data flow identification information for requesting a QoS dynamic policy, or an identifier of an associated media stream.

4. The method of claim 2, wherein the PDU set marking-related information comprises at least one of service data flow identification information to which the PDU set marking is applied, a global identifier of an RTP extension header for the PDU set marking, a local identifier of the RTP extension header for the PDU set marking, information on whether a traversal using relays around NAT (TURN) server is used, or a packet format transmitted by the TURN server.

5. A method for operating a real-time communication application function (RTC AF) in a wireless communication system, the method comprising:
receiving, from a user equipment (UE), a message requesting a dynamic policy to be applied to a service data flow related to a real-time transport protocol (RTP) packet transmitted from a real-time communication application server (RTC AS); and
transmitting, to a core network, a parameter for configuring a quality of service (QoS), based on the message requesting the dynamic policy.

6. The method of claim 5, wherein the message requesting the dynamic policy comprises protocol data unit (PDU) set marking-related information.

7. The method of claim 6, wherein the message requesting the dynamic policy further comprises at least one of an identifier for the dynamic policy, an associated policy template identifier, an associated provisioning session identifier, service data flow identification information for requesting a QoS dynamic policy, or an identifier of an associated media stream.

8. The method of claim 6, wherein the PDU set marking-related information comprises at least one of service data flow identification information to which the PDU set marking is applied, a global identifier of an RTP extension header for the PDU set marking, a local identifier of the RTP extension header for the PDU set marking, information on whether a traversal using relays around NAT (TURN) server is used, or a packet format transmitted by the TURN server.

9. A user equipment (UE) in a wireless communication system, the UE comprising:
a transceiver; and
a controller,
wherein the controller is configured to:
receive, from a base station, a real-time transport protocol (RTP) packet transmitted from a real-time communication application server (RTC AS); and
transmit, to a real-time communication application function (RTC AF), a message requesting a dynamic policy to be applied to a service data flow related to the RTP packet, and
wherein a parameter for configuring a quality of service (QoS) is provided from the RTC AF to a core network based on the message requesting the dynamic policy.

10. The UE of claim 9, wherein the message requesting the dynamic policy comprises protocol data unit (PDU) set marking-related information.

11. The UE of claim 10, wherein the message requesting the dynamic policy further comprises at least one of an identifier for the dynamic policy, an associated policy template identifier, an associated provisioning session identifier, service data flow identification information for requesting a QoS dynamic policy, or an identifier of an associated media stream.

12. The UE of claim 10, wherein the PDU set marking-related information comprises at least one of service data flow identification information to which the PDU set marking is applied, a global identifier of an RTP extension header for the PDU set marking, a local identifier of the RTP extension header for the PDU set marking, information on whether a traversal using relays around NAT (TURN) server is used, or a packet format transmitted by the TURN server.

13. A real-time communication application function (RTC AF) in a wireless communication system, the RTC AF comprising:
a transceiver; and
a controller,
wherein the controller is configured to:
receive, from a user equipment (UE), a message requesting a dynamic policy to be applied to a service data flow related to a real-time transport protocol (RTP) packet transmitted from a real-time communication application server (RTC AS); and
perform control such that a parameter for configuring a quality of service (QoS) is transmitted to a core network based on the message requesting the dynamic policy.

14. The RTC AF of claim 13, wherein the message requesting the dynamic policy comprises protocol data unit (PDU) set marking-related information.

15. The RTC AF of claim 14, wherein the PDU set marking-related information comprises at least one of service data flow identification information to which the PDU set marking is applied, a global identifier of an RTP extension header for the PDU set marking, a local identifier of the RTP extension header for the PDU set marking, information on whether a traversal using relays around NAT (TURN) server is used, or a packet format transmitted by the TURN server.
